**Europäisches Patentamt**

(19) **European Patent Office**

**Office européen des brevets**

(11) Veröffentlichungsnummer: **0 178 636**
**B1**

(12) # EUROPÄISCHE PATENTSCHRIFT

(45) Veröffentlichungstag der Patentschrift: **18.01.89**

(51) Int. Cl.⁴: **B 65 G 43/04**

(21) Anmeldenummer: **85113085.6**

(22) Anmeldetag: **15.10.85**

(54) **Verfahren und Vorrichtung zum Melden eines Staus auf einem Gefässförderer.**

(30) Priorität: **19.10.84 DE 3438358**

(43) Veröffentlichungstag der Anmeldung:
**23.04.86 Patentblatt 86/17**

(45) Bekanntmachung des Hinweises auf die Patenterteilung:
**18.01.89 Patentblatt 89/3**

(84) Benannte Vertragsstaaten:
**AT BE CH DE FR GB IT LI LU NL SE**

(56) Entgegenhaltungen:
**DE-A- 2 952 050**
**DE-B- 1 261 348**
**DE-B- 1 406 112**

(73) Patentinhaber: **KRONES AG Hermann Kronseder Maschinenfabrik, Böhmerwaldstrasse 5, D-8402 Neutraubling (DE)**

(72) Erfinder: **Schlessl, Hans, Markgrafenstrasse 8, D-7530 Pforzheim (DE)**

(74) Vertreter: **Patentanwälte Grünecker, Kinkeldey, Stockmair & Partner, Maximilianstrasse 58, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Melden eines Staus auf einem Gefässförderer mit einem reibschlüssig an den Gefässen angreifenden Fördermittel sowie eine Vorrichtung zur Durchführung dieses Verfahrens.

Vorrichtungen zum Melden eines Staus auf einem Gefässförderer, sogenannte Stauschalter oder Staufühler, werden in Transport- und Behandlungsanlagen für Gefässe zu vielfältigen Überwachungs- und Steuerungsaufgaben eingesetzt. Sie sollen z.B. bei Bildung eines Staus im Einlauf einer Behandlungsmaschine diese auf die maximale Leistung bringen und eine Einlaufsperre öffnen und bei Bildung eines Staus im Auslauf einer Behandlungsmaschine die Einlaufsperre schliessen und die minimale Leistung einregeln (DE-PS 1 803 332).

Es ist bereits ein Stauschalter bekannt, bei dem die seitliche Versetzung zylindrischer Gefässe, wie sie sich im Falle eines Schlupfes zwischen den Gefässen und einem Förderband infolge des Druckes der nachfolgenden Gefässe im Bereich einer erweiterten Messstelle einstellen kann, mittels eines mechanischen Fühlers abgetastet und in einem angeschlossenen Schalter in ein elektrisches Signal umgewandelt wird (DE-PS 922 517). Dieser Stauschalter kann nur beim Transport von Gefässen mit speziellen, beispielsweise gewölbten Seitenwänden eingesetzt werden, bei denen der Nachschubdruck zu einer seitlichen Versetzung führt, nicht dagegen bei Gefässen mit parallelen Seitenwänden, z.B. bei Formflaschen mit rechteckigem Querschnitt. Er ist in seiner Funktion stark von den Reibungsverhältnissen zwischen dem Fördermittel und den Gefässen, dem Gewicht der Gefässe, der Art des verwendeten Kettengleitmittels, dem Zustand des Förderbandes usw. abhängig und spricht erst an, wenn die Menge der nachdrückenden Gefässe oder der Schlupf zwischen den Gefässen und dem Fördermittel einen bestimmten Wert überschritten haben. Dieser bekannte Stauschalter reagiert daher vergleichsweise träge und grob. Ungünstig ist ferner, dass die seitliche Versetzung der Gefässe im Bereich der Messstelle eine unerwünschte Beunruhigung der Gefässbewegung ergibt und zu einer Erhöhung der Lärmemission führt, insbesondere beim Transport von Glasflaschen.

Weiter ist eine Vorrichtung zum Melden eines Staus auf einem einreihigen Gefässförderer mit einem Förderband bekannt, die zwei sich überkreuzende Lichtschranken mit einer angeschlossenen Auswertungseinrichtung aufweist (DE-AS 1 261 348). Die eine der beiden Lichtschranken, welche rechtwinklig zur Transportrichtung verläuft, dient zum Zählen der die Messstelle in einer bestimmten Zeiteinheit passierenden Gefässe, genaugenommen also zu einer Messung der momentanen Förderleistung. Die zweite Lichtschranke, die unter einem spitzen Winkel zur Transportrichtung verläuft, stellt fest, ob im Bereich der Messstelle Gefässe vorhanden sind. Gibt die erste Lichtschranke keine Zählimpulse ab, obwohl die zweite Lichtschranke Gefässe im Bereich der Messstelle meldet, so wird ein Stausignal erzeugt. Das Stausignal wird also gegeben, wenn der Gefässstrom vollständig stillsteht, unabhängig davon, ob das Förderband weiterläuft oder nicht. Es wird also nicht zwischen einem «echten» Stau, bei dem das Förderband weiterläuft, oder einem Stillstand des Förderbandes unterschieden. Des weiteren gibt diese bekannte Vorrichtung keine Staumeldung ab, wenn das Förderband mehr oder weniger stark unter den Gefässen durchrutscht, solange die Gefässe durch die Messstelle hindurchlaufen. In diesem Falle arbeitet nämlich die an die erste Lichtschranke angeschlossene Zähleinrichtung und meldet den Zustand «niedrige Geschwindigkeit». Der in Gefässbehandlungs- und Transportanlagen häufig auftretende Betriebszustand, bei dem das Förderband unter den vorwärtsbewegten, mit einem gewissen Druck aneinander liegenden Gefässen mit Schlupf hindurchläuft, kann somit von der bekannten Vorrichtung nicht erkannt werden. Für den praktischen Einsatz ist diese Vorrichtung daher kaum geeignet.

Der Erfindung liegt die Aufgabe zugrunde, ein Verfahren und eine Vorrichtung zum Melden eines Staus auf einem Gefässförderer zu schaffen, das rasch und feinfühlig arbeitet und unabhängig von den Reibungsverhältnissen und der Querschnittsform der Gefässe ist.

Diese Aufgabe wird bezüglich des Verfahrens durch die im Kennzeichen des Anspruchs 1 angegebenen Merkmale gelöst.

Beim erfindungsgemässen Verfahren wird der für einen Stau charakteristische Schlupf zwischen den Gefässen und dem Fördermittel direkt erfasst, ohne Umweg über den Staudruck bzw. ein seitliches Versetzen der Gefässe. Das Verfahren arbeitet daher unabhängig von der Form der Gefässe, den Reibungsverhältnissen zwischen dem Fördermittel und den Gefässen usw., und es wird die Bewegung der Gefässe in keiner Weise gestört. Auch kann ein Stau bereits am Beginn seiner Entstehung, wenn der Schlupf noch relativ gering ist, sofort erkannt und gemeldet werden. Das erfindungsgemässe Verfahren arbeitet somit besonders zuverlässig, schnell und feinfühlig und ist ausserdem universell einsetzbar. Dabei müssen infolge des anschliessenden Vergleichs nicht unbedingt konkrete Werte für die beiden Geschwindigkeiten, z.B. in m/s, gemessen werden, insbesondere dann, wenn die beiden Messwerte ins Verhältnis gesetzt werden. Auch müssen die beiden Messwerte nicht die gleiche Basis haben. Es kann z.B. ohne weiteres die bei der direkten Geschwindigkeitsmessung der Gefässe ermittelte Durchlaufzeit einer Messstrecke mit einer bei der indirekten Geschwindigkeitsmessung des Fördermittels erhaltenen Drehzahl einer Antriebswelle ins Verhältnis gesetzt werden. Messung im Sinne der Erfindung bedeutet somit lediglich, dass sowohl für die tatsächliche Translationsgeschwindigkeit der Gefässe als auch für die Laufgeschwindigkeit des Fördermittels charakteristische variable Werte ermittelt werden, die bei einem staulosen bzw. schlupflosen Betriebszustand des Gefässförderers in einem bestimmten Verhältnis zueinander stehen.

Eine besonders exakte, schnelle und feinfühlige Arbeitsweise wird erreicht, wenn gemäss der im Anspruch 2 angegebenen Weiterbildung des erfindungsgemässen Verfahrens die Messung der beiden Geschwindigkeiten im wesentlichen gleichzeitig erfolgt. Auch ist es zweckmässig, gemäss der im Anspruch 3 angegebenen Weiterbildung des erfindungsgemässen Verfahrens ein Stausignal erst zu erzeugen, wenn die Abweichung vom staulosen bzw. schlupflosen Betriebszustand einen gewissen Wert überschreitet. Auf diese Weise können z.B. Messungenauigkeiten oder ein beschleunigungsbedingter Schlupf eliminiert werden, und eine Staumeldung wird erst abgegeben, wenn ein echter Stau vorliegt.

Infolge der feinfühligen Arbeitsweise des erfindungsgemässen Verfahrens kann nicht nur eine einfache Staumeldung erzeugt werden, sondern es kann auch die Stärke des Staus, basierend auf der Grösse des Schlupfs zwischen dem Fördermittel und den Gefässen, angegeben werden. Zwei entsprechende Weiterbildungen des erfindungsgemässen Verfahrens sind in den Ansprüchen 4 und 5 angegeben.

Das erfindungsgemässe Verfahren ist sowohl bei einem einreihigen als auch bei einem mehrreihigen Transport der Gefässe anwendbar. Entsprechende Weiterbildungen sind in den Ansprüchen 6 und 7 angegeben.

Um besonders gut vergleichbare Messwerte zu erhalten, ist es vorteilhaft, wenn gemäss den in den Ansprüchen 8 und 9 enthaltenen Weiterbildungen des erfindungsgemässen Verfahrens am Gefässförderer ein bestimmter Messbereich festgelegt wird und die tatsächliche Translationsgeschwindigkeit jedes einzelnen Gefässes im Messbereich separat gemessen wird.

Zur direkten Ermittlung der tatsächlichen Tanslationsgeschwindigkeit der Gefässe hat es sich als besonders vorteilhaft erwiesen, wenn nach der im Anspruch 10 niedergelegten Weiterbildung des erfindunsgemässen Verfahrens die Durchlaufzeit an einer Messstrecke erfasst wird. Eine derartige Messung lässt sich einfach und exakt durchführen.

Andere vorteilhafte Weiterbildungen des erfindungsgemässen Verfahrens sind in den Ansprüchen 11 bis 17 angegeben.

Hinsichtlich der Vorrichtung wird die der Erfindung zugrundeliegende Aufgabe durch die im Anspruch 18 angegebenen Merkmale gelöst.

Die erfindungsgemässe Vorrichtung lässt sich in Gefässtransport- und Behandlungsanlagen universell einsetzen und arbeitet vollkommen unabhängig von der Form der Gefässe, den Reibungsverhältnissen usw. Die vorzugsweise elektronisch arbeitende Auswertungseinrichtung kann an die Art der eingesetzten Gefässfühler sowie an den Messfühler für die Bandgeschwindigkeit problemlos angepasst werden.

Vorteilhafte Weiterbildungen der erfindungsgemässen Vorrichtung sind in den Ansprüchen 19 bis 23 angegeben.

Im nachstehenden wird ein Ausführungsbeispiel der Erfindung anhand der Zeichnungen beschrieben. Es zeigen:

Fig. 1 die Draufsicht auf eine Vorrichtung zum Melden eines Staus an einem Gefässförderer mit einem integrierten Blockschaltbild

Fig. 2 den Schnitt AB nach Fig. 1

Fig. 3 den zeitlichen Verlauf der Ausgangssignale der beiden Lichtschranken der Vorrichtung nach Fig. 1 und 2

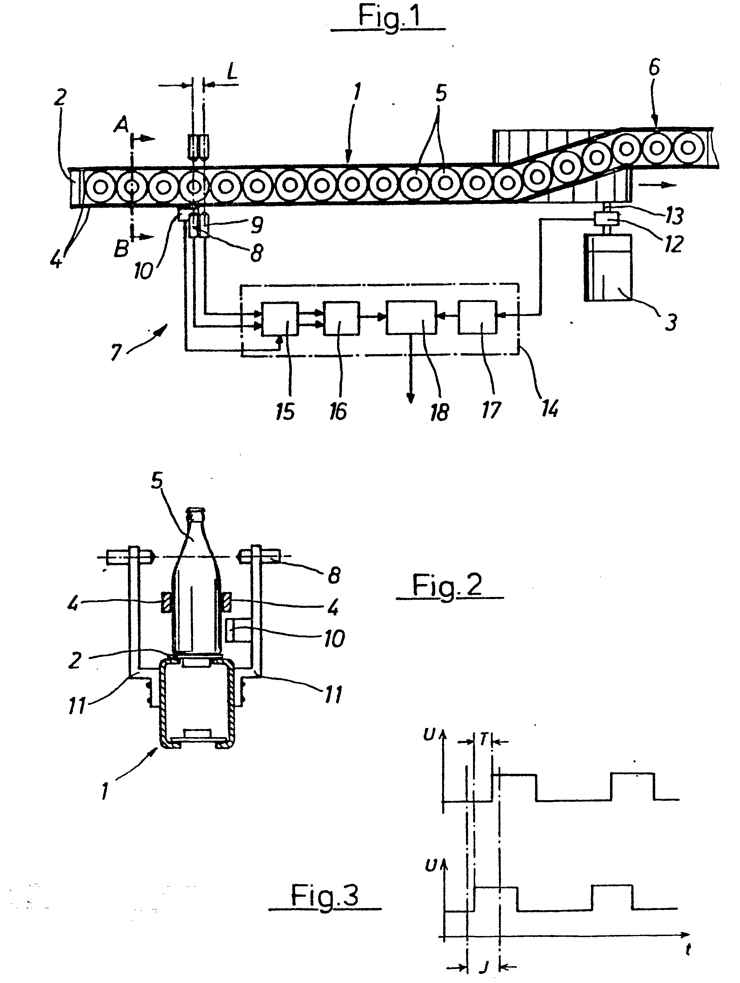

Der Gefässförderer 1 nach Fig. 1 und 2 weist eine horizontale Scharnierbandkette 2, die durch einen Getriebemotor 3 in Pfeilrichtung angetrieben wird, sowie seitliche Geländer 4 zur einreihigen Führung der zu transportierenden Flaschen 5 auf. Die aufrecht stehenden Flaschen 5 werden von einer nicht gezeigten Zusammenführung her in einer mehr oder weniger geschlossenen Einzelreihe angeliefert. Dem Gefässförderer 1 ist ein gleichartiger Gefässförderer 6 nachgeschaltet, der zu einer nicht gezeigten Flaschenbehandlungsmaschine, beispielsweise zu einer Etikettiermaschine, führt und synchron zu dieser angetrieben wird. Durch eine entsprechende Ausbildung der Geländer 4 werden die Flaschen 5 am Ende des ersten Gefässförderers 1 an den zweiten Gefässförderer 6 übergeben.

Am festgelegten Messbereich des ersten Gefässförderers 1, der ein bestimmtes Stück vor der Übergabestelle zum zweiten Gefässförderer 6 liegt, ist eine Vorrichtung 7 zum Melden eines Staus ortsfest angeordnet. Diese Vorrichtung 7 weist zwei auf gleicher Höhe liegende, die Flaschen 5 im Übergangsbereich zwischen Rumpf und Hals abtastende Gefässfühler in Form von gleichartigen Lichtschranken 8 und 9 auf, deren Abstand in Transportrichtung kleiner ist als der Flaschendurchmesser auf Höhe der Messlinien. Der Abstand beträgt bei normalen Getränkeflaschen z.B. 30 mm. Die beiden Lichtschranken 8, 9 sind parallel zueinander und rechtwinklig zur Transportrichtung ausgerichtet. Sie sprechen somit auf die gleiche Stelle der Vorderseite einer Flasche 5 an und liefern zwei gleichartige Signale, deren Verlauf in Fig. 3 gezeigt ist. Der zeitliche Abstand T der beiden Signale gibt an, wieviel Zeit die betreffende Flasche 5 zum Durchlaufen der durch die beiden Lichtschranken 8, 9 gebildeten Messstrecke L benötigt. Im Ausführungsbeispiel wird jeweils die Zeit an der vorderen bzw. ansteigenden Flanke jedes Signals genommen, während die Dauer des Signals ohne Bedeutung ist. Aus der bekannten, konstanten Länge L der Messstrecke und der momentan gemessenen Durchlaufzeit T kann sofort die tatsächliche Translationsgeschwindigkeit der betreffenden Flasche 5 exakt ermittelt werden, unabhängig von der momentanen Laufgeschwindigkeit der Scharnierbandkette 2.

Die Vorrichtung 7 weist weiter einen dritten Gefässfühler in Form eines kapazitiven Sensors 10 auf, der unterhalb der Lichtschranken 8, 9 sitzt.

Der Sensor 10 sowie die Elemente der Lichtschranken 8, 9 sind an zwei starren Konsolen 11 befestigt, die ihrerseits am Rahmen des Gefässförderers 1 befestigt sind. Der Sensor 10 ist den Lichtschranken 8, 9 derart zugeordnet, dass er ein Signal abgibt, solange sich eine Flasche 5 im Messbereich aufhält. Vorzugsweise beginnt das Signal, kurz bevor die vordere Flaschenkontur die erste Lichtschranke 8 erreicht, und endet, kurz nachdem die vordere Flaschenkontur die zweite Lichtschranke 9 passiert hat. Durch den Sensor 10 wird somit das Messintervall 1 festgelegt, bzw. es wird die Verarbeitung falscher Signale von den beiden Lichtschranken 8, 9 unterbunden.

Ferner weist die Vorrichtung 7 einen Messfühler für die momentane Laufgeschwindigkeit der Scharnierbandkette 2 in Form eines Tachogenerators 12 auf. Dieser ist mit der Antriebswelle 13 der Scharnierbandkette 2 verbunden und gibt aufgrund des formschlüssigen Eingriffs zwischen der Scharnierbandkette 2 und deren nicht dargestellten Antriebsrad ein zur Laufgeschwindigkeit der Scharnierbandkette 2 exakt proportionales Signal ab, z.B. in Form einer variablen Spannung.

Die beiden Lichtschranken 8, 9, der Sensor 10 und der Tachogenerator 12 sind an eine gemeinsame Auswertungseinrichtung 14 angeschlossen, die z.B. durch einen Mikrocomputer realisiert wird. Die Auswertungseinrichtung 14 weist ein Gatter 15 auf, das vom Sensor 10 angesteuert wird und die von den Lichtschranken 8, 9 kommenden Signale nur während der Messintervalle 1 durchlässt. An das Gatter 15 ist eine Messeinheit 16 angeschlossen, die den seitlichen Abstand T zwischen den beiden Vorderflanken der Signale der Lichtschranken 8, 9 in einem jeden Messintervall T ermittelt, z.B. in Millisekunden oder in einer anderen Zeiteinheit entsprechend dem Arbeitstakt des Mikrocomputers. Weiter weist die Auswertungseinrichtung 14 einen Signalumformer 17 auf, der das Analogsignal des Tachogenerators 12 in bestimmten Zeitabständen misst bzw. digitalisiert und den jeweils letzten Messwert bis zu nächsten Messung speichert. Die Zeitabstände sind äusserst klein, so dass praktisch der Signalumformer 17 immer einen momentanen Wert dür die Laufgeschwindigkeit der Scharnierbandkette 2 liefert.

Das zentrale Element der Auswertungseinrichtung 14 ist eine Logikeinheit 18, welche die von der Messeinheit 16 kommenden Signale, die die momentane Translationsgeschwindigkeit einer Flasche 5 charakterisieren, und die vom Signalumformer 17 kommenden Signale, die die momentane Laufgeschwindigkeit der Scharnierbandkette 2 charakterisieren, verarbeitet. Je nach Art und Form der Signale ist dies auf verschiedene Weise möglich, z.B. durch Bildung eines Differenzwertes. Besonders günstig ist die Bildung eines Quotienten aus den Werten der Translationsgeschwindigkeit und der Laufgeschwindigkeit, da hierbei Messwerte mit verschiedenen Einheiten direkt verarbeitet werden können. Bezugsbasis hierbei ist der Quotient bei staufreiem Betrieb, wenn die tatsächliche Translationsgeschwindigkeit der Flasche mit der Laufgeschwindigkeit der Scharnierbandkette exakt übereinstimmt. Liefert die Messeinheit 16 in diesem Falle zehn Einheiten und der Signalumformer fünf Einheiten, so beträgt der Bezugsquotient 2 bei allen Laufgeschwindigkeiten der Scharnierbandkette. Ergibt bei gleichbleibender Laufgeschwindigkeit die direkte Messung der Translationsgeschwindigkeit einer Flasche einen Wert von nur acht Einheiten entsprechend einem Schlupf von 20%, so ergibt sich ein Quotient von 1,6.

Die Logikeinheit 18 ist derart programmiert, dass sie ein Stausignal erst ab einem Schlupf von beispielsweise 10%, entsprechend einem Quotienten von 1,8 im obigen Zahlenbeispiel, erzeugt. Geringfügiger Schlupf beim Beschleunigen oder Abbremsen der Scharnierbandkette 2, beim Anlaufen der Flaschen 5 an die Geländer 4 usw. wird so nicht berücksichtigt. Im einfachsten Falle, z. B. bei einer Zwei-Punkt-Regelung einer Flaschenbehandlungsmaschine, gibt die Logikeinheit entweder das Signal «kein Stau» oder «Stau» ab, wobei die Grenze durch entsprechende Festlegung des Schlupf-Grenzwertes exakt definiert werden kann.

Bei der kontinuierlichen Regelung von Gefässförderern dagegen ist es günstiger, wenn das Stausignal in Abhängigkeit von dem gemessenen Schlupfwert variiert wird, z.B. zwischen 0 und 10 Volt, entsprechend einem Schlupf von 0% (kein Stau) bis 100% (Stillstand der Flaschen). Hierdurch wird eine besonders feinfühlige Regelung und beispielsweise ein stoss- und lärmarmes Aufschliessen von Flaschen zwischen zwei Gefässförderern ermöglicht. Dadurch, dass die Translationsgeschwindigkeit jeder den Messbereich passierenden Flasche gemessen und mit dem momentanen Wert für die Laufgeschwindigkeit der Scharnierbandkette 2 verglichen wird, ergibt sich eine kontinuierliche Überwachung und ein sofortiges Ansprechen schon in der Entstehungsphase eines Staus.

**Patentansprüche**

1. Verfahren zum Melden eines Staus auf einem Gefässförderer mit einem reibschlüssig an den Gefässen angreifenden Fördermittel, dadurch gekennzeichnet, dass die tatsächliche Translationsgeschwindigkeit der Gefässe und die Laufgeschwindigkeit des Fördermittels gemessen werden, dann die gemessenen Werte der beiden Geschwindigkeiten miteinander verglichen werden und ein Stausignal erzeugt wird, wenn die Translationsgeschwindigkeit der Gefässe kleiner ist als die Laufgeschwindigkeit des Fördermittels.

2. Verfahren nach Anspruch 1, dadurch gekennzeichnet, dass die tatsächliche Translationsgeschwindigkeit der Gefässe und die Laufgeschwindigkeit des Fördermittesl im wesentlichen gleichzeitig gemessen werden und die im wesentlichen gleichzeitig gemessenen Werte miteinander verglichen werden.

3. Verfahren nach Anspruch 1 oder 2, dadurch gekennzeichnet, dass ein Stausignal nur erzeugt wird, wenn die tatsächliche Translationsgeschwindigkeit der Gefässe mindestens um einen bestimmten Betrag oder mindestens in einem bestimmten Verhältnis kleiner ist als die Laufgeschwindigkeit des Fördermittels.

4. Verfahren nach einem der Ansprüche 1 bis 3, dadurch gekennzeichnet, dass ein Kennwert des Stausignals in Abhängigkeit von der Differenz oder dem Verhältnis der beiden verglichenen Geschwindigkeitswerte variiert wird.

5. Verfahren nach Anspruch 4, dadurch gekennzeichnet, dass der Kennwert des Stausignals proportional zur Differenz oder zum Verhältnis der beiden verglichenen Geschwindigkeitswerte variiert wird.

6. Verfahren nach einem der Ansprüche 1 bis 5, dadurch gekennzeichnet, dass bei einem mehrreihigen Gefässtransport die tatsächliche Translationsgeschwindigkeit bestimmter Gefässe in einer äusseren Gefässreihe separat gemessen wird.

7. Verfahren nach einem der Ansprüche 1 bis 5, dadurch gekennzeichnet, dass bei einem einreihigen Gefässtransport die tatsächliche Translationsgeschwindigkeit bestimmter Gefässe in der Gefässreihe separat gemessen wird.

8. Verfahren nach einem der Ansprüche 1 bis 7, dadurch gekennzeichnet, dass am Gefässförderer ein bestimmter Messbereich festgelegt wird und die Translationsgeschwindigkeit der den Messbereich passierenden Gefässe gemessen wird.

9. Verfahren nach Anspruch 8, dadurch gekennzeichnet, dass die tatsächliche Translationsgeschwindigkeit jedes einzelnen Gefässes im Messbereich separat gemessen wird.

10. Verfahren nach Anspruch 8 oder 9, dadurch gekennzeichnet, dass im Messbereich eine konstante, sich in Transportrichtung erstreckende Messstrecke festgelegt wird und die für das Passieren der Messstrecke erforderliche Durchlaufzeit eines Gefässes gemessen wird.

11. Verfahren nach Anspruch 10, dadurch gekennzeichnet, dass die Länge der Messstrecke kleiner gewählt wird als die Abmessung der Gefässe in Transportrichtung auf Höhe der Messstrecke.

12. Verfahren nach einem der Ansprüche 1 bis 11, dadurch gekennzeichnet, dass die Laufgeschwindigkeit des Fördermittels indirekt gemessen wird, z.B. über die Drehzahl oder Winkelgeschwindigkeit einer Antriebswelle.

13. Verfahren nach einem der Ansprüche 1 bis 12, dadurch gekennzeichnet, dass die Laufgeschwindigkeit des Fördermittels kontinuierlich gemessen wird.

14. Verfahren nach einem der Ansprüche 1 bis 13, dadurch gekennzeichnet, dass die Laufgeschwindigkeit des Fördermittels in bestimmten Zeitabständen gemessen wird und jeder gemessene Wert bis zur nächsten Messung gespeichert wird.

15. Verfahren nach einem der Ansprüche 1 bis 14, dadurch gekennzeichnet, dass das Stausignal zur Regelung der Laufgeschwindigkeit des Fördermittels herangezogen wird.

16. Verfahren nach Anspruch 15, dadurch gekennzeichnet, dass die Regelung derart vorgenommen wird, dass die Differenz oder das Verhältnis der Translationsgeschwindigkeit der Gefässe und der Laufgeschwindigkeit des Fördermittels im wesentlichen konstant bleibt.

17. Verfahren nach einem der Ansprüche 1 bis 16, dadurch gekennzeichnet, dass die Translationsgeschwindigkeit der Gefässe auf einer Höhe gemessen wird, in der diese bei gegenseitiger Berührung eine Lücke offenlassen.

18.. Vorrichtung zur Durchführung des Verfahrens nach Anspruch 1 mit zwei dem Gefässförderer (1) zugeordneten Gefässfühlern (8, 9) und einer an diese angeschlossenen Auswertungseinrichtung (14), die beim Vorliegen bestimmter Eingangssignale ein Stausignal erzeugt, dadurch gekennzeichnet, dass die beiden Gefässfühler (8, 9) unter Bildung einer Messstrecke (L) derart in einem gewissen Abstand in Transportrichtung am Gefässförderer (1) angeordnet sind, dass ein vorbeilaufendes Gefäss nacheinander in den beiden Gefässfühlern (8, 9) ein Ausgangssignal auslöst und dass an die Auswertungseinrichtung (14) ein die Laufgeschwindigkeit des Fördermittels (2) erfassender Messfühler (12) angeschlossen ist.

19. Vorrichtung nach Anspruch 18, dadurch gekennzeichnet, dass die Auswertungseinrichtung (14) ein Stausignal erzeugt, wenn der Zeitabstand zwischen den beiden durch ein bestimmtes Gefäss an den Gefässfühlern (8, 9) ausgelösten Ausgangssignalen um einen bestimmten Betrag oder in einem bestimmten Verhältnis von dem Zeitabstand abweicht, wie er bei der momentanen Laufgeschwindigkeit des Fördermittels (2) und einem schlupffreien Kontakt zwischen Gefäss und Fördermittel (2) vorliegen würde.

20. Vorrichtung nach Anspruch 19, dadurch gekennzeichnet, dass der Abstand der beiden Gefässfühler (8, 9) in Transportrichtung kleiner ist als die Abmessung des Gefässes in Transportrichtung auf Höhe der Gefässfühler (8, 9).

21. Vorrichtung nach einem der Ansprüche 18 bis 20, dadurch gekennzeichnet, dass die beiden Gefässfühler durch parallele, vorzugsweise rechtwinklig zur Transportrichtung ausgerichtete Lichtschranken (8, 9) gebildet werden.

22. Vorrichtung nach einem der Ansprüche 18 bis 21, mit einem als Förderband ausgebildeten Fördermittel, dadurch gekennzeichnet, dass der Messfühler für die Laufgeschwindigkeit durch einen mit einer Antriebswelle (13) des Förderbandes (2) verbundenen Tachogenerator (12) gebildet werden.

23. Vorrichtung nach einem der Ansprüche 18 bis 22, dadurch gekennzeichnet, dass an die Auswertungseinrichtung (14) ein dritter Gefässfühler (10) angeschlossen ist, der auf das Vorhandensein eines Gefässes im Bereich der Messstrecke (L) und/oder auf die Annäherung eines Gefässes an die Messstrecke (L) anspricht.

## Claims

1. A method of signalling an accumulation on a container conveyor having a conveying means frictionally engaging the containers, characterised in that the actual translational speed of the containers and the speed at which the conveying means is running are measured, the measured values of the two speeds are then compared with another and an accumulation signal is produced if the translational speed of the containers is lower than the speed at which the conveying means is running.

2. A method as claimed in claim 1, characterised in that the actual translational speed of the containers and the speed at which the conveying means is running are measured substantially simultaneously and the values measured substantially simultaneously are compared with one another.

3. A method as claimed in claim 1 or 2, characterised in that an accumulation signal is produced only when the actual translational speed of the containers is lower than running speed of the conveying means by a predetermined amount or at least in a predetermined ratio thereto.

4. A method as claimed in any of claims 1 or 3, characterised in that a characteristic value of the accumulation signal is varied in dependence upon the difference between, or the ratio of, the values of the two speeds compared.

5. A method as claimed in claim 5, characterised in that the characteristic value of the accumulation signal is varied in proportion to the difference between, or the ratio of, the two values of the speeds compared.

6. A method as claimed in any of claims 1 to 5, characterised in that, in the case of multi-row conveying of containers, the actual translational speed of specific containers in an outer row of containers is measured separately.

7. A method as claimed in any of claims 1 to 5, characterised in that, in the case of single-row conveying of containers, the actual translational speed of specific containers in the row of containers is measured separately.

8. A method as claimed in any of claims 1 to 7, characterised in that a predetermined measuring region is established on the container conveyor, and the translational speed of the containers passing through the measuring region is measured.

9. A method as claimed in claim 8, characterised in that the actual translational speed of each individual container in the measuring region is measured separately.

10. A method as claimed in claim 8 or 9, characterised in that a constant measuring section extending in the direction of conveying is established in the measuring region, and the transit time of a container required for passing through the measuring section is measured.

11. A method as claimed in claim 10, characterised in that the length of the measuring section is chosen to be shorter than the dimension of the containers in the direction of conveying on a level with the measuring section.

12. A method as claimed in any of claims 1 to 11, characterised in that the running speed of the conveying means is measured indirectly, for example by way of the rotational speed or angular velocity of a drive shaft.

13. A method as claimed in any of claims 1 to 12, characterised in that the running speed of the conveying means is measured continuously.

14. A method as claimed in any of claims 1 to 13, characterised in that the running speed of the conveying means is measured at predetermined intervals of time and each measured value is stored up to the next measurement.

15. A method as claimed in any of claims 1 to 14, characterised in that the accumulation signal is used to control the running speed of the conveying means.

16. A method as claimed in claim 15, characterised in that the control is undertaken in such a way that the difference between, or the ratio of, the translational speed of the containers and the running speed of the conveying means remains substantially constant.

17. A method as claimed in any of claims 1 to 16, characterised in that the translational speed of the containers is measured at a height in which the containers leave a gap when they are in mutual contact.

18. A device for carrying out the method as claimed in claim 1, comprising two container sensors (8, 9) associated with the container conveyor (1) and an evaluation device (14) which is connected to the said container sensors and which produces an accumulation signal when predetermined input signals exist, characterised in that the two container sensors (8, 9) are disposed at a certain distance apart in the direction of conveying on the container conveyor (1) to form a measuring section (L), in such a way that a container moving past successively triggers an output signal in the two container sensors (8, 9) and that a measuring sensor (12) for detecting the running speed of the conveying means (2) is connected to the evaluation device (14).

19. A device as claimed in claim 18, characterised in that the evaluation device (14) produces an accumulation signal when the interval of time between the two output signals triggered on the container sensors (8, 9) by a specific container differs by a predetermined amount from, or in a predetermined ratio to, the interval of time which would exist at the instantaneous running speed of the conveying means (2) and slip-free contact between container and conveying means (2).

20. A device as claimed in claim 19, characterised in that the distance between the two container sensors (8, 9) in the direction of conveying is smaller than the dimension of the container in the direction of conveying at the heigt of the container sensors (8, 9).

21. A device as claimed in any of claims 18 to 20, characterised in that the two container sensors are parallel light barriers (8, 9) aligned preferably at right angles to the direction of conveying.

22. A device as claimed in any of claims 18 to 21, having a conveying means in the form of a conveyor belt, characterised in that the measuring sensor for the running speed is a tachogenerator (12) connected to the drive shaft (13) of the conveyor belt (2).

23. A device as claimed in any of claims 18 to 22, characterised in that a third container sensor (10) is connected to the evaluation device (14) and responds to the presence of a container in the region of the measuring section (L) and/or to a container approaching the measuring section (L).

**Revendications**

1. Procédé pour signaler une accumulation sur un transporteur de récipients comportant un moyen transporteurs agissant par frottement sur les récipients, caractérisé en ce qu'on mesure la vitesse de translation effective des récipients et la vitesse de circulation du moyen transporteur, qu'on compare ensuite l'une avec l'autre les valeurs mesurées des deux vitesses et qu'on produit un signal d'accumulation si la vitesse de translation de récipients est inférieure à la vitesse de circulation du moyen transporteur.

2. Procédé selon la revendication 1, caractérisé en ce que la vitesse de translation effective des récipients et la vitesse de circulation du moyen transporteur sont mesurées sensiblement en même temps, et les valeurs mesurées sensiblement en même temps sont comparées l'une à l'autre.

3. Procédé selon la revendication 1 ou 2, caractérisé en ce qu'on ne produit un signal d'accumulation que si la vitesse de translation effective des récipients est inférieure à la vitesse de circulation du moyen transporteur d'au moins une quantité déterminée, ou d'au moins un pourcentage déterminé.

4. Procédé selon l'une des revendications 1 à 3, caractérisé en ce qu'on fait varier un paramètre du signal d'accumulation en fonction de la différence ou du rapport des deux valeurs de vitesse comparées.

5. Procédé selon la revendication 4, caractérisé en ce qu'on fait varier le paramètre du signal d'accumulation proportionnellement à la différence ou au rapport des deux valeurs de vitesse comparées.

6. Procédé selon l'une des revendications 1 à 5, caractérisé en ce qu'on mesure séparément, dans le cas d'un transport de récipients en plusieurs rangées, la vitesse de translation effective de récipients déterminés dans une rangée de récipients extérieure.

7. Procédé selon l'une des revendications 1 à 5, caractérisé en ce que, dans le cas d'un transport de récipients en une seule rangée, on mesure séparément dans la rangée de récipients la vitesse de translation effective de récipients déterminés.

8. Procédé selon l'une des revendications 1 à 7, caractérisé en ce qu'on détermine sur le transporteur de récipients une zone de mesure déterminée et qu'on mesure la vitesse de translation des récipients franchissant la zone de mesure.

9. Procédé selon la revendication 8, caractérisé en ce qu'on mesure séparément la vitesse de translation effective de chaque récipient individuel dans la zone de mesure.

10. Procédé selon la revendication 8 ou 9, caractérisé en ce qu'on détermine dans la zone de mesure un parcours de mesure constant s'étandant dans le sens du transport et on mesure le temps de passage d'un récipient nécessaire pour franchir le parcours de mesure.

11. Procédé selon la revendication 10, caractérisé en ce que la longueur du parcours de mesure est choisie inférieure à la dimension des récipients dans le sens du transport, à la hauteur du parcours de mesure.

12. Procédé selon l'une des revendications 1 à 11, caractérisé en ce qu'on mesure directement la vitesse de circulation du moyen de transport, par exemple par la vitesse de rotation ou la vitesse angulaire d'un arbre d'entraînement.

13. Procédé selon l'une des revendications 1 à 12, caractérisé en ce que la vitesse de circulation du moyen transporteur est mesurée en continu.

14. Procédé selon l'une des revendications 1 à 13, caractérisé en ce que la vitesse de circulation du moyen transporteur est mesurée à intervalles de temps déterminés et chaque valeur mesurée est mémorisée jusqu'à la mesure suivante.

15. Procédé selon l'une des revendications 1 à 14, caractérisé en ce que le signal d'accumulation est utilisé pour régler la vitesse de circulation du moyen transporteur.

16. Procédé selon la revendication 15, caractérisé en ce qu'on effectue le réglage de telle sorte que la différence ou le rapport entre la vitesse de translation des récipients et la vitesse de circulation du moyen transporteur reste sesiblement constant.

17. Procédé selon l'une des revendications 1 à 16, caractérisé en ce que la vitesse de translation des récipients est mesurée à une hauteur à laquelle ceux-ci laissent un espace ouvert lors de leur contact mutuel.

18. Dispositif pour mettre en œvre le procédé selon la revendication 1, comportant deux détecteurs de récipients (8, 9) associés à un transporteur de récipients (1) et un dispositif d'évaluation (14) raccordé à ceux-ci qui, lors de l'apparition de signaux d'entrée déterminés, produit un signal d'accumulation, caractérisé en ce que les deux détecteurs (8, 9) sont disposés sur le transporteur de récipients (1), à une distance déterminée dans le sens du transport, en formant un parcours de mesure (L) de telle sorte que le passage d'un récipient déclenche un signal de sortie successivement dans les deux détecteurs de récipients (8, 9) et en ce qu'un détecteur de mesure (12) mesurant la vitesse de circulation du moyen transporteur (2) est raccordé au dispositif d'évaluation (14).

19. Dispositif selon la revendication 18, caractérisé en ce que le dispositif d'évaluation (14) produit un signal d'accumulation lorsque l'intervalle de temps entre les deux signaux de sortie déclenchés par un récipient déterminé sur les détecteurs de récipients (8, 9) s'écarte d'une quantité déterminée, ou dans un rapport déterminé, de l'intervalle de temps tel qu'il existerait pour la vitesse instantanée du moyen transporteur (2) et un contact sans patinage entre le récipient et le moyen transporteur (2).

20. Dispositif selon la revendication 19, caractérisé en ce que la distance entre les deux détecteurs de récipients (8, 9) dans le sens du transport est inférieure à la dimension du récipient dans le sens du transport, à hauteur des détecteurs de récipients (8, 9).

21. Dispositif selon l'une des revendications 18 à 20, caractérisé en ce que les deux détecteurs de récipients sont constitués par des barrages photoélectriques (8, 9) parallèles, orientés de préférence perpendiculairement au sens du transport.

22. Dispositif selon l'une des revendications 18 à 21, comportant un moyen transporteur réalisé sous forme de bande transporteuse, caractérisé en ce que le détecteur de mesure pour la vitesse de circulation est formé par une génératrice tachymétrique (12) reliée à un arbre d'entraînement (13) de la bande transporteuse (2).

23. Dispositif selon l'une des revendications 18 à 22, caractérisé en ce qu'on raccorde au dispositif d'évaluation (14) un troisième détecteur de mesure (10) qui réagit à la présence d'un récipient dans la zone du parcours de mesure (L) et/ou à l'approche d'un récipient du parcours de mesure (L).

Fig.1

Fig.2

Fig.3